# EUROPEAN PATENT APPLICATION

(11) **EP 4 804 213 A1**
(43) Date of publication of application: **09.09.2026**
(21) Application number: 24885752.6
(22) Date of filing: 30.10.2024
(51) Int. Cl.: H01B 13/00, H01B 1/06, H01B 1/10, H01M 4/62, H01M 10/052, H01M 10/058, H01M 10/0562

(54) **METHOD FOR PRODUCING SULFIDE SOLID ELECTROLYTE AND METHOD FOR PRODUCING ALL-SOLID-STATE CELL**

(30) Priority: 31.10.2023 JP 2023186696
(71) Applicant: Mitsubishi Gas Chemical Company, Inc., Tokyo 100-8324 (JP)
(72) Inventor: KONYA, Masashi, Niigata-shi, Niigate 950-3112 (JP); YOSHIDA, Yuto, Niigata-shi, Niigate 950-3112 (JP)
(74) Representative: Vossius & Partner Patentanwälte Rechtsanwälte mbB
(86) International application number: PCT/JP2024/038663
(87) International publication number: WO 2025/094985

(57) **Abstract**

To provide a method for producing a sulfide solid electrolyte having high water resistance, and the like. A method for producing a sulfide solid electrolyte, comprising a step of subjecting a sulfide solid electrolyte to at least one treatment selected from the group consisting of a mixing treatment and a disintegration treatment in a solvent, wherein the solvent comprises an aprotic solvent containing an oxygen atom.

## Description

### Technical Field

The present invention relates to a method for producing a sulfide solid electrolyte, a method for producing an all-solid-state battery (cell), and the like.

### Background Art

Conventionally, non-aqueous electrolyte secondary batteries have been widely used in applications for portable information terminals, mobile electronic devices, and the like. Flammable organic solvents are usually used in electrolytic solutions of electrolytes for use in non-aqueous electrolyte secondary batteries. Therefore, non-aqueous electrolyte secondary batteries usually not only are provided with strong outer packages so that organic solvents are not leaked, but also have functions in preparation for the risk of leakage of electrolytic solutions just in case, and there are limitations on the structures of devices.

In recent years, applications of non-aqueous electrolyte secondary batteries have been expanded to movable bodies such as electric vehicles, hybrid electric vehicles and airplanes, stationary electricity storage systems, and the like, and high-capacity non-aqueous electrolyte secondary batteries have been demanded. High-capacity non-aqueous electrolyte secondary batteries are demanded to have higher safety.

In view of such circumstances, there are focused on non-aqueous electrolyte secondary batteries in which no flammable organic solvents are used, high safety can be realized and solid electrolytes are used. Herein, such non-aqueous electrolyte secondary batteries with solid electrolytes are also sometimes called all-solid-state batteries.

As solid electrolytes, sulfide solid electrolytes and oxide solid electrolytes are known. In particular, sulfide solid electrolytes, having high ionic conductivity, thus have attracted attention in recent years.

For example, Patent Literature 1 describes the invention relating to a sulfide solid electrolyte particle containing a sulfide solid electrolyte comprising Li, P, S, and halogen as constituent elements, in which the oxygen/sulfur element ratio on a surface, as measured by XPS, is 0.79 or more and 1.25 or less and the oxygen/sulfur element ratio at a position of 30 nm (in terms of sputtering rate of SiO₂) from the surface is 0.58 or less. Patent Literature 1 describes the following: the sulfide solid electrolyte, in which a surface of the sulfide solid electrolyte is oxidized so that the oxygen/sulfur element ratio on the surface and the oxygen/sulfur element ratio at a position of 30 nm from the surface satisfy the specified values, thus can have sufficient ion conductivity and can be suppressed in percentage of increase in resistivity after a charge-discharge cycle when used in an all-solid-state battery.

Here, the sulfide solid electrolyte particle described in Patent Literature 1 is described to be able to be produced by oxidizing and crystallizing sulfide solid electrolyte glass obtained by amorphization of a raw material composition according to mechanical milling, by heating at a temperature equal to or more than the crystallization temperature of the glass in the presence of an oxidant.

### Citation List

### Patent Literature

Patent Literature 1: Japanese Patent Laid-Open No. 2020-115425

### Summary of Invention

### Technical Problem

Sulfide solid electrolytes, although exhibit high ionic conductivity as described above, are not sufficient in water resistance and can be reacted with a trace of moisture in air to cause decomposition of sulfide solid electrolytes and generation of hydrogen sulfide. In order to avoid such a situation, the production environments of sulfide solid electrolytes and all-solid-state batteries are usually set to low-moisture environments, thereby resulting in tendencies to increase the production cost and deteriorate productivity.

On the contrary, there are made studies about application of water resistance treatments to sulfide solid electrolytes. For example, the sulfide solid electrolyte particle described in Patent Literature 1, in which the surface is surface-treated by oxidization in the course of production, thus can have certain water resistance. However, it cannot be sometimes said that water resistance is sufficient in a case where a water resistance treatment is performed in the course of production.

There are then provided a method for producing a sulfide solid electrolyte having high water resistance, and the like.

### Problem to be Solved

The present invention includes, for example, the following aspects.
[1] A method for producing a sulfide solid electrolyte, comprising a step of subjecting a sulfide solid electrolyte to at least one treatment selected from the group consisting of a mixing treatment and a disintegration treatment in a solvent, wherein
   the solvent comprises an aprotic solvent containing an oxygen atom.
[2] The production method according to [1], wherein the solvent comprises at least one selected from the group consisting of an ester solvent and an ether solvent.
[3] The production method according to [2], wherein the solvent comprises an ester solvent.
[4] The production method according to [3], wherein the ester solvent comprises at least one selected from the group consisting of ethyl acetate and ethyl propionate.
[5] The production method according to any of [2] to [4], wherein the solvent comprises an ether solvent.
[6] The production method according to [5], wherein the ether solvent comprises dibutyl ether.
[7] The production method according to any of [1] to [6], wherein the treatment comprises a mixing treatment.
[8] The production method according to any of [1] to [7], wherein the treatment comprises a disintegration treatment.
[9] The production method according to any of [1] to [8], wherein the sulfide solid electrolyte comprises an LGPS-type sulfide solid electrolyte.
[10] The production method according to any of [1] to [8], wherein the sulfide solid electrolyte comprises an argyrodite-type sulfide solid electrolyte.
[11] The production method according to any of [1] to [10], wherein the sulfide solid electrolyte comprises tin (Sn).
[12] A method for producing an all-solid-state battery, comprising a step of forming an all-solid-state battery comprising a sulfide solid electrolyte produced by the method according to any of [1] to [11].

### Advantageous Effects of Invention

According to the present invention, a method for producing a sulfide solid electrolyte having high water resistance, and the like are provided.

### Description of Embodiments

Hereinafter, a mode for carrying out the present invention is described in detail.

### 1. Method for producing sulfide solid electrolyte

The method for producing a sulfide solid electrolyte according to the present invention comprises a step of subjecting a sulfide solid electrolyte to at least one treatment selected from the group consisting of a mixing treatment and a disintegration treatment in a solvent (hereinafter, also referred to as "water resistance treatment step"). Here, the solvent comprises an aprotic solvent containing an oxygen atom.

According to the present invention, the water resistance treatment is performed not in the course of production of a sulfide solid electrolyte, but after production of a sulfide solid electrolyte. Here, the water resistance treatment is performed by the mixing treatment and/or the disintegration treatment in a predetermined solvent. Thus, a sulfide solid electrolyte having high water resistance can be produced. Herein, "after production of a sulfide solid electrolyte" means at a timepoint of or after obtaining a sulfide solid electrolyte having desired crystal structure and particle size (primary particle size). For example, in a case where a sulfide solid electrolyte is produced by mechanically milling a raw material composition to produce an intermediate amorphized, and crystalizing and then pulverizing the intermediate, a water resistance treatment to be applied to the raw material composition, the intermediate, and a sulfide solid electrolyte before pulverization does not correspond to the water resistance treatment "after production of a sulfide solid electrolyte". On the other hand, a water resistance treatment to be applied to a sulfide solid electrolyte after pulverization corresponds to the water resistance treatment "after production of a sulfide solid electrolyte".

### (1) Water resistance treatment step

The water resistance treatment step in the present invention is a step of subjecting a sulfide solid electrolyte to at least one treatment selected from the group consisting of a mixing treatment and a disintegration treatment in a solvent, as described above.

### [Sulfide solid electrolyte]

The sulfide solid electrolyte is not particularly limited, and comprises at least one of an alkali metal element and an alkaline-earth metal element, and sulfur (S).

Examples of the alkali metal element include lithium (Li), sodium (Na), potassium (K), rubidium (Rb), and cesium (Cs).

Examples of the alkaline-earth metal element include beryllium (Be), magnesium (Mg), calcium (Ca), strontium (Sr), barium (Ba), and radium (Rd). Herein, the "alkaline-earth metal element" encompasses beryllium (Be) and magnesium (Mg).

In particular, the alkali metal element and the alkaline-earth metal element preferably comprise at least one of lithium (Li) and sodium (Na), more preferably comprises lithium (Li). The alkali metal element and the alkaline-earth metal element may be each comprised singly or in combinations of two or more kinds thereof.

The sulfide solid electrolyte may comprise still other element. Examples of such other element include tin (Sn), silicon (Si), germanium (Ge), antimony (Sb), phosphorus (P), halogen (fluorine (F), chlorine (Cl), bromine (Br), iodine (I)), and oxygen (O). Here, such other element may be comprised singly or in combinations of two or more kinds thereof.

In particular, the sulfide solid electrolyte preferably comprises tin (Sn). In other words, in one embodiment, the sulfide solid electrolyte preferably comprises at least one of the alkali metal element and the alkaline-earth metal element, sulfur (S), and tin (Sn), more preferably comprises lithium (Li), sulfur (S), and tin (Sn). The sulfide solid electrolyte preferably comprises tin (Sn) from the viewpoint that, for example, ionic conductivity is increased, water resistance is enhanced, and the enhancement effect of water resistance by the water resistance treatment in the present invention is more increased.

The sulfide solid electrolyte may be crystalline or non-crystalline (also referred to as "glass" or "amorphous"), and is preferably crystalline.

The crystalline form of the sulfide solid electrolyte is not particularly limited, and examples include an LGPS type, an argyrodite type, and a Thio-LISICON type.

The LGPS-type sulfide solid electrolyte is a solid electrolyte comprising lithium (Li), germanium (Ge), phosphorus (P), and sulfur (S), and mainly contains a crystal structure which has a LiS₆ octahedron, a GeS₄ tetrahedron, and a PS₄ tetrahedron and in which the PS₄ tetrahedron has a ridge together with the GeS₄ tetrahedron and the LiS₆ octahedron, and the PS₄ tetrahedron has a vertex together with the LiS₆ octahedron.

The LGPS-type sulfide solid electrolyte can be formed by substituting germanium (Ge) with tin (Sn) or silicon (Si). The LGPS-type sulfide solid electrolyte can also be formed by introducing halogen (fluorine (F), chlorine (Cl), bromine (Br), and/or iodine (I)) and/or oxygen (O). For example, some sulfur (S) can be substituted with oxygen (O), thereby changing the size of a tunnel in a crystal through which a Li ion passes, to the size which more easily allows for conduction, and increasing the ion conductivity.

In one embodiment, the LGPS-type sulfide solid electrolyte is represented by the following formula.

Li-M¹-M²-P-S-X¹

Here, M¹ is Ge, Sn, or Si, M² is a single bond, Ge, Sn, or Si, and X¹ is absent, or fluorine (F), chlorine (Cl), bromine (Br), iodine (I)) or oxygen (O).

M¹ is preferably Ge or Sn, more preferably Sn. M² is preferably a single bond. X¹ is preferably absent, or chlorine (Cl) or oxygen (O), more preferably absent.

Specific examples of the compositional ratio of the LGPS-type sulfide solid electrolyte include Li₁₀GeP₂S₁₂, Li₁₀SnP₂S₁₂, Li_{10.35}Ge_{1.35}P_{1.65}S₁₂, Li_{10.35}Si_{1.35}P_{1.65}S₁₂, Li_{9.81}Sn_{0.81}P_{2.19}S₁₂, Li₁₀(Si_{0.5}Ge_{0.5})P₂S₁₂, Li₁₀(Ge_{0.5}Sn_{0.5})P₂S₁₂, Li₁₀(Si_{0.5}Sn_{0.5})P₂S₁₂, Li_{9.54}Si_{1.74}P_{1.44}Si_{11.7}Cl_{0.3}, Li₁₀GeP₂S_{11.7}O_{0.3}, Li_{9.42}Si_{1.02}P_{2.1}S_{9.96}O_{2.04}, and Li_{10.35}[Sn_{0.27}Si_{1.08}]P_{1.65}S₁₂(Li_{3.45}[Sn_{0.09}Si_{0.36}]P_{0.55}S₄).

The argyrodite-type sulfide solid electrolyte has the same crystal structure as in a cubic Cu-argyrodite compound and an Ag-argyrodite compound.

Specific examples of the compositional ratio of the argyrodite-type sulfide solid electrolyte include Li₆PS₅Cl, Li_{5.4}PS_{4.4}Cl_{1.6}, Li_{5.8}PS_{4.8}Cl_{1.2}, Li₆PS₅Br, Li_{5.4}PS_{4.4}Cl_{0.8}Br_{0.8}, Li₆PS₅I,, Li_{6.6}Ge_{0.6}P_{0.4}S₅I, and Li₇Ge₃PS₁₂.

The Thio-LISICON-type sulfide solid electrolyte has a γ-Li₃PO₄-type skeleton structure.

In one embodiment, the Thio-LISICON-type sulfide solid electrolyte is represented by the following formula.

Li₂S-P₂S₅-X²

Here, X² is absent, or Li-halogen or M³S₂, and M³ is Sn, Ge, Ga, or Si.

X² is preferably absent, or LiCl, LiBr, LiI, SnS₂, GeS₂ or SiS₂, more preferably absent, or LiCl, GeS₂ or SiS₂.

In one embodiment, the Thio-LISICON-type sulfide solid electrolyte is represented by the following formula.

Li₂S-M⁴S₂

Here, M⁴ is Sn, Ge, Ga, or Si, preferably Sn, Ge, or Si.

Specific examples of the Thio-LISICON-type sulfide solid electrolyte include Li₂S-SnS₂, Li₂S-P₂S₅, Li₂S-P₂S₅-LiI, Li₂S-P₂S₅-LiCl, Li₂S-P₂S₅-LiBr, Li₂S-GeS₂, Li₂S-SiS₂, Li₂P₂S₆, Li₄P₂S₆, Li₇P₃S₁₁, α-Li₃PS₄, β-Li₃PS₄, γ-Li₃PS₄, LT-Li₇PS₆, HT-Li₇PS₆, and Li_{4.275}Ge_{0.61}Ga_{0.25}S₄.

Here, the above sulfide solid electrolyte may be used singly or in combinations of two or more kinds thereof.

In one embodiment, the sulfide solid electrolyte preferably comprises an LGPS-type sulfide solid electrolyte from the viewpoint that, for example, ionic conductivity is increased, water resistance is enhanced, and the enhancement effect of water resistance by the water resistance treatment in the present invention is more increased.

In one embodiment, the sulfide solid electrolyte preferably comprises the argyrodite-type sulfide solid electrolyte from the viewpoint that ionic conductivity is high.

The particle size (primary particle size) of the sulfide solid electrolyte is preferably 0.1 to 10 µm, more preferably 0.1 to 5 µm. Herein, the "particle size (primary particle size)" means the maximum value among distances between two points on the profile line of an object, and means the average value of the particle sizes of any 50 objects comprised in one visual field of a scanning electron microscope (SEM).

The sulfide solid electrolyte may be produced by a known method, or a commercially available product may be used.

For example, the sulfide solid electrolyte can be produced by a mechanical milling method comprising mechanically milling a raw material composition to prepare a precursor amorphized, and heating the precursor amorphized; a liquid phase method comprising preparing a precursor in a solution, removing a solvent, and heating the precursor; or the like. In particular, the sulfide solid electrolyte is preferably produced by the mechanical milling method.

The raw material used for production of the sulfide solid electrolyte is not particularly limited, and a raw material serving as a lithium source, a raw material serving as a phosphorus source, a raw material serving as a sulfur source, a raw material serving as a silicon source, a raw material serving as a germanium source, a raw material serving as a tin source, a raw material serving as a chlorine source, a raw material serving as a bromine source, a raw material serving as an iodine source, a raw material serving as an oxygen source, and the like can be used.

Examples of the raw material serving as a lithium source include, but not particularly limited thereto, metallic lithium (Li), lithium sulfide (Li₂S), lithium chloride (LiCl), lithium bromide (LiBr), lithium iodide (LiI), Li₃PS₄, and Li₄SnS₄.

Examples of the raw material serving as a phosphorus source include elemental phosphorus (P), diphosphorus trisulfide (P₂S₃), diphosphorus pentasulfide (P₂S₅), phosphorus pentachloride (PCl₅), phosphorus tribromide (PBr₃), phosphorus pentabromide (PBr₅), and Li₃PS₄.

Examples of the raw material serving as a sulfur source include elemental sulfur (S), lithium sulfide (Li₂S), phosphorus sulfide (P₂S₅), silicon sulfide (SiS₂), germanium sulfide (GeS₂), tin sulfide (SnS), tin disulfide (SnS₂), diphosphorus trisulfide (P₂S₃), diphosphorus pentasulfide (P₂S₅), aluminum sulfide (Al₂S₃), diboron trisulfide (B₂S₃), Li₃PS₄, and Li₄SnS₄.

Examples of the raw material serving as a silicon source include silicon sulfide (SiS₂), silicon (Si), and silicon dioxide (SiO₂).

Examples of the raw material serving as a germanium source include germanium sulfide (GeS₂), germanium (Ge), and germanium dioxide (GeO₂).

Examples of the raw material serving as a tin source include tin sulfide (SnS), tin disulfide (SnS₂), tin(II) oxide (SnO), tin(IV) oxide (SnO₂), tin(VI) oxide (SnO₃), tin (Sn), and Li₄SnS₄.

Examples of the raw material serving as a chlorine source include lithium chloride (LiCl) and phosphorus pentachloride (PCl₅).

Examples of the raw material serving as a bromine source include lithium bromide (LiBr), phosphorus tribromide (PBr₃), and phosphorus pentabromide (PBr₅).

Examples of the raw material serving as an iodine source include lithium iodide (LiI).

Examples of the raw material serving as an oxygen source include lithium oxide (Li₂O), phosphorus pentoxide (P₂O₅), silicon dioxide (SiO₂), germanium dioxide (GeO₂), tin(II) oxide (SnO), tin(IV) oxide (SnO₂), and tin(IV) oxide (SnO₃).

In particular, the raw material preferably comprises lithium sulfide (Li₂S), diphosphorus pentasulfide (P₂S₅), tin sulfide (SnS), tin disulfide (SnS₂), Li₃PS₄, Li₄SnS₄.

Such a solid electrolyte raw material may be used singly or in combinations of two or more kinds thereof. The compositional ratio of the raw material can be modified to produce a desired sulfide solid electrolyte.

### [Solvent]

The solvent comprises an aprotic solvent containing an oxygen atom. The solvent is aprotic, and thus, for example, generation of hydrogen sulfide due to decomposition of the sulfide solid electrolyte can be prevented. The solvent contains an oxygen atom, and thus, for example, the water resistance treatment (oxidation or the like of a surface of the sulfide solid electrolyte) of the sulfide solid electrolyte can be made.

Examples of the solvent include, but not particularly limited thereto, an ester solvent, an ether solvent, a ketone solvent, and a sulfoxide solvent.

Examples of the ester solvent include methyl acetate, ethyl acetate, propyl acetate, isopropyl acetate, butyl acetate, isobutyl acetate, s-butyl acetate, isoamyl acetate, methyl propionate, ethyl propionate, and butyl propionate.

Examples of the ether solvent include diethyl ether, dibutyl ether, t-butyl methyl ether, tetrahydrofuran, 2-methyltetrahydrofuran (MHF), 4-methyltetrahydropyran (MTHP), 1,4-dioxane, and methoxycyclopentane.

Examples of the ketone solvent include acetone, methyl ethyl ketone, 4-methyl-2-pentanone, 2-butanone, 3-methyl-2-butanone, 2-pentanone, 3-pentanone, 2-heptanone, isoamyl methyl ketone, cyclopentanone, cyclohexanone, and diisobutyl ketone.

Examples of the sulfoxide solvent include dimethyl sulfoxide (DMSO).

In particular, the solvent preferably comprises at least one selected from the group consisting of an ester solvent, an ether solvent, and a ketone solvent, more preferably comprises at least one selected from the group consisting of an ester solvent and an ether solvent, further preferably comprises at least one selected from ethyl acetate, ethyl propionate, and dibutyl ether. The above solvents may be used singly or in combinations of two or more kinds thereof.

In one preferred embodiment, the solvent comprises an ester solvent. The ester solvent preferably comprises at least one selected from the group consisting of methyl acetate, ethyl acetate, propyl acetate, isopropyl acetate, butyl acetate, methyl propionate, ethyl propionate, and butyl propionate, more preferably comprises at least one selected from the group consisting of ethyl acetate and ethyl propionate, further preferably comprises ethyl acetate.

In one preferred embodiment, the solvent comprises an ether solvent. The ether solvent preferably comprises at least one selected from diethyl ether, dibutyl ether, and tetrahydrofuran, more preferably comprises dibutyl ether.

The amount of the solvent used is preferably 1 to 50 mL, more preferably 3 to 40 mL, further preferably 5 to 30 mL, particularly preferably 5 to 20 mL based on 1 g of the sulfide solid electrolyte.

The sulfide solid electrolyte in the solvent is preferably a suspension (slurry) dispersed in the solvent. The content of the sulfide solid electrolyte in the solvent is preferably 1 to 50% by mass, more preferably 3 to 40% by mass, further preferably 5 to 30% by mass, particularly preferably 5 to 20% by mass based on the total mass of the solvent and the sulfide solid electrolyte.

### [Treatment (water resistance treatment)]

The sulfide solid electrolyte achieves water resistance by a treatment in a solvent, for example, oxidization of a surface of the sulfide solid electrolyte. Here, the treatment is selected from the group consisting of a mixing treatment and a disintegration treatment.

Herein, the "mixing treatment" means mixing of a solvent and the sulfide solid electrolyte in the solvent. Examples of the mixing treatment include a stirring treatment and a vibration treatment.

Herein, the "disintegration treatment" means that a sulfide solid electrolyte (secondary particle, aggregate, or the like) mutually bound or aggregated is dispersed or broken by application of separating force in the solvent. Specific examples of the disintegration treatment include a Filmics treatment (registered trademark, a technique for evenly disintegrating a treated product by stirring energy with a high-speed rotating thin film), a compression treatment, a friction treatment, and a shear treatment.

The treatment (water resistance treatment) in the present invention is selected from the group consisting of a mixing treatment and a disintegration treatment. The mixing treatment or the disintegration treatment can be performed in the solution, thereby making the sulfide solid electrolyte water-resistant.

Each of the mixing treatment and the disintegration treatment provides almost no change in particle size (primary particle size) of the sulfide solid electrolyte before and after the treatment, and therefore the water resistance treatment can be uniformly applied to a surface of each particle of the sulfide solid electrolyte. In this regard, the treatment (water resistance treatment) in the present invention is different from "pulverizing treatment". Herein, "pulverizing treatment" means that the sulfide solid electrolyte is segmentalized by application of physical energy to the sulfide solid electrolyte. In other words, the particle size (primary particle size) of the sulfide solid electrolyte is smaller by the pulverizing treatment. In a case where the "pulverizing treatment" is performed, water resistance of the resulting sulfide solid electrolyte can be relatively lower because, for example, the sulfide solid electrolyte is decomposed due to physical energy applied, and/or the variation in degree of formation of a water-resistant surface of each particle of the sulfide solid electrolyte is generated due to segmentalization of the sulfide solid electrolyte even if water resistance can be made through the pulverizing treatment.

### (Mixing treatment)

The mixing treatment is not particularly limited, and can be performed by a known method.

For example, in a case where the mixing treatment is performed by a stirring treatment, the stirring temperature is not particularly limited, and is preferably 10 to 60°C, more preferably 15 to 45°C.

The stirring time is not particularly limited, and is preferably 1 to 120 minutes, more preferably 5 to 60 minutes.

In a case where the mixing treatment is performed by a vibration treatment, the rate of vibration is not particularly limited, and is preferably 1 to 50 kHz, more preferably 5 to 30 kHz.

The vibration time is not particularly limited, and is preferably 1 to 120 minutes, more preferably 5 to 60 minutes.

In a case where mixing is performed by vibration, an ultrasonic homogenizer is suitably used.

In one embodiment, the treatment (water resistance treatment) in the present invention preferably comprises the mixing treatment from the viewpoint of a more increase in ion conductivity, or more preferably comprises the stirring treatment from the viewpoint that the particles can be uniformly subjected to the water resistance treatment without any special apparatus.

In one embodiment, in a case where the treatment (water resistance treatment) in the present invention comprises the mixing treatment (preferably stirring treatment), the solvent preferably comprises an ester solvent, more preferably comprises at least one selected from the group consisting of methyl acetate, ethyl acetate, propyl acetate, isopropyl acetate, butyl acetate, methyl propionate, ethyl propionate, and butyl propionate, further preferably comprises at least one selected from the group consisting of ethyl acetate and ethyl propionate, further preferably comprises ethyl acetate, from the viewpoint of a more enhancement in water resistance.

### (Disintegration treatment)

The disintegration treatment is not particularly limited, and can be performed by a known method.

For example, in a case where disintegration is performed by the Filmics treatment, the circumferential speed of stirring is preferably 5 to 40 m/s, more preferably 10 to 40 m/s.

The treatment time is preferably 0.5 to 10 minutes, more preferably 1 to 5 minutes.

In a case where disintegration is performed by the compression treatment, the treatment method is preferably an ultra-high-pressure homogenizer treatment.

The treatment pressure in the compression treatment is preferably 10 to 300 MPa, more preferably 30 to 250 MPa.

In a case where disintegration is performed by the shear treatment, the treatment method is preferably a wet jet mill treatment.

The shear force is preferably 10 to 300 MPa, more preferably 30 to 250 MPa.

In one embodiment, the treatment (water resistance treatment) in the present invention preferably comprises the disintegration treatment from the viewpoint that the particle aggregated can be uniformly dispersed, and more preferably comprises the Filmics treatment from the viewpoint that no excess energy is applied to the particle and a reduction in ion conductivity can be suppressed.

In one embodiment, in a case where the treatment (water resistance treatment) in the present invention comprises the disintegration treatment (preferably Filmics treatment), the solvent preferably comprises at least one selected from the group consisting of an ester solvent and an ether solvent, more preferably comprises at least one selected from the group consisting of ethyl acetate, butyl acetate, methyl propionate, ethyl propionate, diethyl ether, dibutyl ether, and tetrahydrofuran, further preferably comprises at least one selected from the group consisting of ethyl acetate, ethyl propionate, and dibutyl ether, from the viewpoint of dispersibility of the sulfide solid electrolyte in the solvent.

### (2) Drying step

The production method according to the present invention may further comprise a drying step. The drying step is usually performed after the water resistance treatment step. The drying step is a step of removing a solvent from a mixed liquid (preferably suspension (slurry)) comprising a sulfide solid electrolyte obtained in the water resistance treatment step, and the solvent.

The drying step is preferably performed in an inert gas atmosphere or a vacuum atmosphere, more preferably performed in an atmosphere of a nitrogen gas, a helium gas, or an argon gas.

The drying temperature is preferably 40 to 250°C, more preferably 50 to 250°C. A drying temperature of 40°C or more is preferred because the solvent can be suitably removed. In this regard, a drying temperature of 250°C or less is preferred because the change of properties of the sulfide solid electrolyte can be suppressed.

The drying time is preferably 0.5 to 24 hours, more preferably 1 to 8 hours.

The drying step may be performed at two stages. In one embodiment, the drying step comprises a first drying step of performing drying at 40 to 100°C (preferably 50 to 90°C), and a second drying step of performing drying at 110 to 250°C (preferably 140 to 200°C). The drying step can be performed at two stages, resulting in a reduction in production cost. For example, the solvent can be efficiently removed by removing most of the solvent in the first drying step and thereafter removing a solvent (coordinated solvent) coordinated to the sulfide solid electrolyte, in the second drying step.

### 2. Method for producing all-solid-state battery

According to one mode of the present invention, a method for producing an all-solid-state battery is provided. The production method comprises a step of forming an all-solid-state battery comprising a sulfide solid electrolyte produced by the above method.

In one embodiment, the production method comprises a step of stacking a solid electrolyte layer formed with a sulfide solid electrolyte produced by the above method, a positive electrode layer, and a negative electrode layer to form an all-solid-state battery. Here, the "all-solid-state battery" means a battery in which a solid electrolyte is used as an electrolyte. A usual all-solid-state battery comprises a positive electrode layer, a solid electrolyte layer, and a negative electrode layer.

The solid electrolyte layer is formed with a sulfide solid electrolyte produced by the above method. Here, the solid electrolyte layer may be produced with only the sulfide solid electrolyte, or may be produced in combination use with any other solid electrolyte. Examples of such any other solid electrolyte include a sulfide solid electrolyte produced by any other method, an oxide solid electrolyte, and a complex hydride solid electrolyte. These other solid electrolytes may be used singly or in combinations of two or more kinds thereof.

The sulfide solid electrolyte produced by the above method is subjected to the water resistance treatment, and thus the resulting solid electrolyte layer can exhibit high water resistance.

The positive electrode layer and/or the negative electrode layer may also be formed with the sulfide solid electrolyte produced by the above method. In a case where the sulfide solid electrolyte is used to produce the positive electrode layer or the negative electrode layer, the positive electrode layer or the negative electrode layer is formed by combination with a known positive electrode active material or negative electrode active material for lithium ion secondary batteries. Here, the ratio of the amount of the sulfide solid electrolyte comprised in the positive electrode layer or the negative electrode layer is not particularly limited. Here, the positive electrode layer and the negative electrode layer may each comprise known current collector, conductive aid, binder, and the like.

The all-solid-state battery is made by forming and stacking the above positive electrode layer, solid electrolyte layer, and negative electrode layer, and the forming method and the stacking method of each of the layers are not particularly limited.

Examples include a method involving dispersing a solid electrolyte and/or an electrode active material in a solvent to form a slurry, and applying and extending the slurry by a doctor blade, spin coating, or the like to form a film; a gas phase method involving forming and stacking a film by a vacuum vapor deposition method, an ion-plating method, a sputtering method, a laser ablation method, or the like; and a pressure-forming method involving forming and stacking a powder by hot pressing or cold pressing under no application of any temperature.

A sulfide solid electrolyte produced by the above-mentioned method is relatively soft, and thus the all-solid-state battery is particularly preferably made by forming and stacking each of the layers by a pressure-forming. The pressure-forming method is hot pressing performed under warming or a cold pressing performed under no warming, and sufficient formation can be made even by cold pressing.

### Examples

Hereinafter, the present invention is described in further detail with reference to Examples, but the present invention is not limited to these Examples.

### [Example 1]

### (1) Production of LGPS-type sulfide solid electrolyte

### (1-1) Production of β-Li₃PS₄

Li₂S (manufactured by Enpower Japan, purity 99.95%) and P₂S₅ (manufactured by Sigma-Aldrich Co. LLC, purity 99%) were weighed in a glove box under an argon atmosphere so that a molar ratio of Li₂S:P₂S₅ = 1.35:1 was achieved.

Next, Li₂S and P₂S₅ were added in the listed order to tetrahydrofuran (manufactured by Wako Pure Chemical Corporation, super-dehydrated grade) so that the concentration of (Li₂S + P₂S₅) was 10% by weight, and mixed at room temperature (25°C) for 48 hours or more. The mixture was gradually dissolved, and a substantially uniform solution slightly comprising an insoluble fraction was obtained. The insoluble fraction was taken by filtration with a membrane filter (polytetrafluoroethylene (PTFE), pore size: 1.0 µm), thereby obtaining a uniform solution.

Li₂S was further added to the uniform solution so that the compositional ratio of all the raw materials was a molar ratio of Li₂S:P₂S₅ = 3:1, and mixed at room temperature (25°C) for 5 days or more, thereby obtaining a suspension. The suspension obtained was subjected to filtration under pressure, and a filter cake was dried in vacuum, thereby obtaining β-Li₃PS₄·3THF.

### (1-2) Powderization step of β-Li₃PS₄

β-Li₃PS₄·3THF obtained was added to acetonitrile (manufactured by Wako Pure Chemical Corporation, super-dehydrated grade) in a glove box under an argon atmosphere so that a concentration of 6% by weight was achieved, and mixed at room temperature (25°C) for 2 days or more, thereby obtaining a slurry.

After acetonitrile was removed at 50°C under reduced pressure from the slurry obtained, the resulting powder was dried under vacuum at 180°C for 4 hours, thereby removing a coordinated solvent. Thereafter, cooling to room temperature (25°C) was performed to obtain a microparticulated B-Li₃PS₄ powder.

### (1-3) Production of Li₄SnS₄

Li₂S (purity: 99.8%, manufactured by Enpower Japan) and SnS₂ (purity: 99.99%, manufactured by Career Henan Chemical Co.) were weighed in a glove box in an argon atmosphere so that the stoichiometric proportion of Li₄SnS₄ was achieved, and mixed by use of a Laboratory Blender (manufactured by Waring Laboratory Science) for 5 minutes.

The resulting mixture was fired at 550°C for 16 hours, thereby obtaining Li₄SnS₄.

### (1-4) Powderization step of Li₄SnS₄

In a glove box under an argon atmosphere, 92.5 g of Li₄SnS₄ obtained was added to 475 mL of methanol (super-dehydrated grade, manufactured by Wako Pure Chemical Corporation, boiling point: 64°C), and mixed at room temperature (25°C) for 24 hours or more. Here, Li₄SnS₄ was gradually dissolved. An insoluble fraction derived from a production step of Li₄SnS₄, comprised in the resulting solution, was subjected to filtration with a membrane filter (polytetrafluoroethylene (PTFE), pore size: 1.0 µm), thereby obtaining a uniform solution in which Li₄SnS₄ was dissolved.

Next, under an argon atmosphere, 2.5 L of super dehydrated acetonitrile was loaded to a 5-L flask to allow acetonitrile to be in a total reflux state by a distillation apparatus. Dropped was 475 mL of the above-prepared Li₄SnS₄ methanol solution at a rate of 3.5 mL/min, into acetonitrile. The methanol dropped was volatilized after dropping, and a Li₄SnS₄ particle was precipitated in acetonitrile. The rate of distillation was so as to be 7 mL/min corresponding to twice the rate of dropping, by an operation with an electromagnetic valve in a distillation portion. A timepoint at which the overhead temperature reached 80°C (boiling point of acetonitrile: 82°C) after completion of dropping of the Li₄SnS₄ methanol solution was defined as an endpoint of distillation.

After acetonitrile was removed at 50°C under reduced pressure from the resulting slurry, the resulting powder was dried under vacuum at 180°C for 4 hours, thereby removing a coordinated solvent. Such removal of the solvent was performed under stirring of the slurry. Thereafter, cooling to room temperature (25°C) was performed to obtain a microparticulated Li₄SnS₄ powder.

### (1-5) Production of LGPS-type sulfide solid electrolyte

In a glove box under an argon atmosphere, 26.5 g of the β-Li₃PS₄ powder and the Li₄SnS₄ powder produced in the above steps in total was weighed so that a molar ratio of β-Li₃PS₄:Li₄SnS₄ = 2.7:1 was achieved. The raw materials weighed were subjected to a pulverizing/mixing treatment with a wet bead mill (UAM015 manufactured by HIROSHIMA METAL & MACHINERY CO., LTD.) for 4 hours. Wet mixing was performed with zirconia beads "YTZ" (manufactured by Nikkato Corporation) of 0.05 mm in diameter, and the percentage of filling of a pulverizing chamber with the beads was 80%. The dispersion medium used here was acetonitrile (super-dehydrated grade, manufactured by Wako Pure Chemical Corporation), the slurry concentration was 6% by weight, the circumferential speed was 8 m/s, and circulation was made at 10 L/min.

After acetonitrile was removed at 50°C under reduced pressure from the slurry obtained after the above treatment, the resulting powder was dried under vacuum at 180°C for 15 minutes, thereby removing a coordinated solvent. Such removal of the solvent was performed under stirring of the slurry. Thereafter, cooling to room temperature (25°C) was performed to obtain a precursor powder of β-Li₃PS₄ + Li₄SnS₄.

The precursor powder obtained was fired at 550°C for 2 hours, thereby obtaining a Li_{9.81}Sn_{0.81}P_{2.19}S₁₂ crystal being an LGPS-type sulfide solid electrolyte.

### (2) Water resistance treatment step and drying step

To 8 mL of ethyl acetate (super-dehydrated grade, manufactured by Wako Pure Chemical Corporation) was added 0.75 g of the LGPS-type sulfide solid electrolyte (Li_{9.81}Sn_{0.81}P_{2.19}S₁₂ crystal), and subjected to a stirring treatment at room temperature (25°C) for 30 minutes.

After ethyl acetate was removed at 80°C from the slurry obtained after the stirring treatment, the resulting powder was dried at 180°C for 1 hour, thereby removing a coordinated solvent. Such removal of the solvent was performed on a hot plate. Thereafter, cooling to room temperature (25°C) was performed to obtain an LGPS-type sulfide solid electrolyte (Li_{9.81}Sn_{0.81}P_{2.19}S₁₂ crystal) subjected to the water resistance treatment. A series of operations was carried out in a glove box under an argon atmosphere. Here, when the particle sizes (primary particle sizes) of the LGPS-type sulfide solid electrolytes before and after the water resistance treatment step and the drying step were compared in SEM images, no change in particle size (primary particle size) was observed.

### [Example 2]

An LGPS-type sulfide solid electrolyte (Li_{9.81}Sn_{0.81}P_{2.19}S₁₂ crystal) was produced which was subjected to the water resistance treatment by the same method as in Example 1 except that dibutyl ether (manufactured by Sigma-Aldrich Co. LLC, purity ≥ 99%) was used instead of ethyl acetate in (2) Water resistance treatment step and drying step. When the particle sizes (primary particle sizes) of the LGPS-type sulfide solid electrolytes before and after the water resistance treatment step and the drying step were compared in SEM images, no change in particle size (primary particle size) was observed. The dibutyl ether used was one subjected to a dehydration treatment with a molecular sieve (3A 1/16 manufactured by Wako Pure Chemical Corporation).

### [Example 3]

### (1) Production of LGPS-type sulfide solid electrolyte

An LGPS-type sulfide solid electrolyte (Li_{9.81}Sn_{0.81}P_{2.19}S₁₂ crystal) was produced by the same method as in Example 1.

### (2) Water resistance treatment step and drying step

One g of the LGPS-type sulfide solid electrolyte (Li_{9.81}Sn_{0.81}P_{2.19}S₁₂ crystal) was subjected to a wet disintegration treatment with FILMIX Model: 30-L type (manufactured by PRIMIX Corporation) being a thin-film spin system high-speed mixer. Here, the dispersion medium used here was ethyl acetate (super-dehydrated grade, manufactured by Wako Pure Chemical Corporation), the slurry concentration was 11% by weight, the circumferential speed was 29.9 m/s, and the treatment time was 1 minute.

Ethyl acetate was removed at 80°C from the slurry obtained after the wet disintegration treatment, and the resulting powder was dried at 180°C for 1 hour, thereby removing a coordinated solvent. Such removal of the solvent was performed on a hot plate. Thereafter, cooling to room temperature (25°C) was performed to obtain an LGPS-type sulfide solid electrolyte (Li_{9.81}Sn_{0.81}P_{2.19}S₁₂ crystal) subjected to the water resistance treatment. A series of operations was carried out in a glove box under an argon atmosphere. Here, when the particle sizes (primary particle sizes) of the LGPS-type sulfide solid electrolytes before and after the water resistance treatment step and the drying step were compared in SEM images, no change in particle size (primary particle size) was observed.

### [Example 4]

An LGPS-type sulfide solid electrolyte (Li_{9.81}Sn_{0.81}P_{2.19}S₁₂ crystal) was produced which was subjected to the water resistance treatment by the same method as in Example 3 except that dibutyl ether (manufactured by Sigma-Aldrich Co. LLC, purity ≥ 99%) was used instead of ethyl acetate in (2) Water resistance treatment step and drying step. When the particle sizes (primary particle sizes) of the LGPS-type sulfide solid electrolytes before and after the water resistance treatment step and the drying step were compared in SEM images, no change in particle size (primary particle size) was observed. The dibutyl ether used was one subjected to a dehydration treatment with a molecular sieve (3A 1/16 manufactured by Wako Pure Chemical Corporation).

### [Comparative Example 1]

### (1) Production of LGPS-type sulfide solid electrolyte

A β-Li₃PS₄ powder and a Li₄SnS₄ powder were produced by the same method as in Example 1.

In a glove box under an argon atmosphere, 5.2 g of each of β-Li₃PS₄ and Li₄SnS₄ produced in the above steps was weighed so that a molar ratio of β-Li₃PS₄:Li₄SnS₄ = 2.7:1 was achieved. The raw materials weighed were subjected to a pulverizing/mixing treatment with a wet bead mill (EasyNano RMBII02 model, manufactured by AIMEX Co., Ltd.) for 1 hour. Wet mixing was performed with zirconia beads "YTZ" (manufactured by Nikkato Corporation) of 0.05 mm in diameter. The dispersion medium used here was a mixed solvent of dibutyl ether (manufactured by Sigma-Aldrich Co. LLC, purity ≥ 99%) and heptane (super-dehydrated grade, manufactured by Wako Pure Chemical Corporation) (heptane/dibutyl ether = 20/80 (% by volume)), the slurry concentration was 8% by weight, and the circumferential speed was 12 m/s.

After the solvent was removed at 50°C under reduced pressure from the slurry obtained after the above treatment, the resulting powder was dried under vacuum at 180°C for 15 minutes, thereby removing a coordinated solvent. Such removal of the solvent was performed under stirring of the slurry. Thereafter, cooling to room temperature (25°C) was performed to obtain a precursor powder of β-Li₃PS₄ + Li₄SnS₄.

The precursor powder obtained was fired at 550°C for 2 hours, thereby obtaining a Li_{9.81}Sn_{0.81}P_{2.19}S₁₂ crystal being an LGPS-type sulfide solid electrolyte.

### [Comparative Example 2]

An LGPS-type sulfide solid electrolyte (Li_{9.81}Sn_{0.81}P_{2.19}S₁₂ crystal) was produced which was subjected to the water resistance treatment by the same method as in Example 3 except that heptane (super-dehydrated grade, manufactured by Wako Pure Chemical Corporation) was used instead of ethyl acetate in (2) Water resistance treatment step and drying step. Here, when the particle sizes (primary particle sizes) of the LGPS-type sulfide solid electrolytes before and after the water resistance treatment step and the drying step were compared in SEM images, no change in particle size (primary particle size) was observed.

### (1) Argyrodite-type sulfide solid electrolyte

A Li₆PS₅Cl_{0.9}I_{0.1} crystal (NEI Corporation) being a commercially available argyrodite-type sulfide solid electrolyte was obtained.

### (2) Water resistance treatment step and drying step

An argyrodite-type sulfide solid electrolyte (Li₆PS₅Cl_{0.9}I_{0.1} crystal) was obtained which was subjected to the water resistance treatment by the same method as in Example 1 except that an argyrodite-type sulfide solid electrolyte (Li₆PS₅Cl_{0.9}I_{0.1} crystal) was used instead of the LGPS-type sulfide solid electrolyte (Li_{9.81}Sn_{0.81}P_{2.19}S₁₂ crystal). Here, when the particle sizes (primary particle sizes) of the argyrodite-type sulfide solid electrolytes before and after the water resistance treatment step and the drying step were compared in SEM images, no change in particle size (primary particle size) was observed.

Table 1 below shows the production methods in Examples 1 to 4, Comparative Examples 1 to 2, and Example 5.

**[Table 1]**

| | Sulfide solid electrolyte | Water resistance treatment | Solvent |
|---|---|---|---|
| Example 1 | LGPS | Stirring | Ethyl acetate |
| Example 2 | LGPS | Stirring | Dibutyl ether |
| Example 3 | LGPS | Disintegration | Ethyl acetate |
| Example 4 | LGPS | Disintegration | Dibutyl ether |
| Comparative Example 1 | LGPS | Pulverizing (precursor) | Dibutyl ether Heptane |
| Comparative Example 2 | LGPS | Disintegration | Heptane |
| Example 5 | Argyrodite | Stirring | Ethyl acetate |

### [Evaluation]

The sulfide solid electrolyte subjected to the water resistance treatment, produced in each of the methods in Examples 1 to 4, Comparative Examples 1 to 2 and Example 5, as well as the LGPS-type sulfide solid electrolyte (Reference Example 1) produced by (1-5) in Example 1 and not subjected to the water resistance treatment, and the commercially available argyrodite-type sulfide solid electrolyte (Reference Example 2) used as the raw material in Example 5 and not subjected to the water resistance treatment were evaluated with respect to the amount of hydrogen sulfide generated, the ion conductivity, and the percentage of increase in half-value width. The results obtained are shown in Table 2 below.

### [Amount of hydrogen sulfide generated]

Under an argon atmosphere, 10 mg of the sulfide solid electrolyte was weighed and left to stand in a closed container (volume 3000 cc, dry air having a dew point of -30°C and a temperature of 25°C). While the air in the closed container was circulated with a fan, the amount of hydrogen sulfide generated was measured with a hydrogen sulfide sensor (ToxiRAE Pro series). The amount of hydrogen sulfide generated until a lapse of 1 hour after exposure of the sulfide solid electrolyte to the dry air was measured. The amount of hydrogen sulfide generated was shown as the value per unit area of the sulfide solid electrolyte.

### [Ion conductivity]

The sulfide solid electrolyte was subjected to uniaxial molding (480 MPa), to obtain a disc having a thickness of about 1 mm and a diameter of 10 mm. An all-solid-state battery evaluation cell (manufactured by Hohsen Corp.) was used to perform AC impedance measurement at room temperature (25°C) with "SI1260 IMPEDANCE/GAIN-PHASE ANALYZER" (manufactured by Solartron Analytical) according to a four-terminal method, and the lithium ion conductivity was calculated. Specifically, the disc was placed in a constant-temperature bath set to 25°C, and retained for 30 minutes, and thereafter the lithium ion conductivity was measured. The measurement frequency was in a range of 0.1 Hz to 1 MHz, and the amplitude was 50 mV.

### [Percentage of increase in half-value width]

The sulfide solid electrolyte was subjected to X-ray diffraction measurement (CuKα: λ = 1.5405 Å) under an Ar atmosphere at room temperature (25°C) with "X'Pert3 Powder" (manufactured by PANalytical). Furthermore, the half-value width of a main peak having the maximum diffraction intensity was calculated. The calculation method is as follows.

Specifically, the diffraction data obtained by X-ray diffraction measurement was imported into crystal structure analysis software "SmartLab studio II", and fitting of the background and a peak was performed. The division type pseudo Voigt function was selected for profile fitting, and the half-value width of each peak was calculated.

In Examples 1 to 4 and Comparative Examples 1 to 2, the percentage of increase in half-value width was calculated with, as a reference, the half-value width of a peak in Reference Example 1. In Example 5, the percentage of increase in half-value width was calculated with, as a reference, the half-value width of a peak in Reference Example 2.

**[Table 2]**

| | Amount of hydrogen sulfide generated (×10⁻² cc/m²) | Ion conductivity (×10⁻³ S/cm) | Percentage of increase in half-value width (%) |
|---|---|---|---|
| Example 1 | 1.9 | 2.3 | 2.3 (2 θ = 29.23°) |
| Example 2 | 4.4 | 2.4 | 3.4 (2 θ = 29.24°) |
| Example 3 | 4.6 | 1.7 | 13.1 (2 θ = 29.26°) |
| Example 4 | 4.6 | 1.6 | 14.3 (2 θ = 29.13°) |
| Comparative Example 1 | 5.3 | 1.7 | ND* |
| Comparative Example 2 | 7.9 | 1.8 | 18.3 (2 θ = 29.25°) |
| Reference Example 1 | 6.2 | 3.0 | - (2 θ = 29.27°) |
| Example 5 | 510.6 | 1.6 | 8.7 (2 θ = 29.77°) |
| Reference Example 2 | 544.7 | 1.9 | - (2 θ = 29.82°) |

| | | | |
|---|---|---|---|
| *ND: No Data | | | |

It was found from the results in Table 2 that the sulfide solid electrolyte subjected to the water resistance treatment in each of Examples 1 to 5 was small in amount of hydrogen sulfide generated and had high water resistance.

## Claims

1. A method for producing a sulfide solid electrolyte, comprising a step of subjecting a sulfide solid electrolyte to at least one treatment selected from the group consisting of a mixing treatment and a disintegration treatment in a solvent, wherein
the solvent comprises an aprotic solvent containing an oxygen atom.

2. The production method according to claim 1, wherein the solvent comprises at least one selected from the group consisting of an ester solvent and an ether solvent.

3. The production method according to claim 2, wherein the solvent comprises an ester solvent.

4. The production method according to claim 3, wherein the ester solvent comprises at least one selected from the group consisting of ethyl acetate and ethyl propionate.

5. The production method according to claim 2, wherein the solvent comprises an ether solvent.

6. The production method according to claim 5, wherein the ether solvent comprises dibutyl ether.

7. The production method according to claim 1, wherein the treatment comprises a mixing treatment.

8. The production method according to claim 1, wherein the treatment comprises a disintegration treatment.

9. The production method according to claim 1, wherein the sulfide solid electrolyte comprises an LGPS-type sulfide solid electrolyte.

10. The production method according to claim 1, wherein the sulfide solid electrolyte comprises an argyrodite-type sulfide solid electrolyte.

11. The production method according to claim 1, wherein the sulfide solid electrolyte comprises tin (Sn).

12. A method for producing an all-solid-state battery, comprising a step of forming an all-solid-state battery comprising a sulfide solid electrolyte produced by the method according to any one of claims 1 to 11.
